# EUROPEAN PATENT SPECIFICATION

(11) **EP 3 294 820 B1**
(45) Date of publication and mention of the grant of the patent: **20.03.2019**
(21) Application number: 16723476.4
(22) Date of filing: 12.05.2016
(51) Int. Cl.: C09D 175/04

(54) **FRAGMENT RETENTIVE COATING FORMULATION**
FRAGMENTZURÜCKHALTENDE BESCHICHTUNGSFORMULIERUNG
FORMULATION DE REVÊTEMENT À RÉTENTION DE FRAGMENTS

(30) Priority: 12.05.2015 GB 201508090
(43) Date of publication of application: 21.03.2018
(73) Proprietor: Performance Paints Ltd., Gloucestershire GL20 8JH (GB)
(72) Inventor: MCKELVIE, Raymond James, Tewkesbury Gloucestershire GL20 8JH (GB)
(74) Representative: LKGLOBAL Lorenz & Kopf PartG mbB Patentanwälte
(86) International application number: PCT/GB2016/051378
(87) International publication number: WO 2016/181160

(56) References cited:
- EP-A1- 2 626 379
- US-A1- 2014 106 163
- US-A1- 2014 295 329

## Description

### FIELD OF THE INVENTION

The present invention relates to fragment retentive coating formulations for use in coating substrates, in particular glass substrates. The present invention also relates to substrates comprising a fragment retentive coating formulation. The present invention also relates to a method of producing fragment retentive coating formulations, and to a method of coating a substrates with fragment retentive coating formulations.

### BACKGROUND

Glass substrates, such as for example cosmetics, perfume, pharmaceutical, beverage bottles or drinking glasses, are prone to breakage when accidentally dropped or knocked against a hard surface. When the glass substrates break there is a risk that the glass fragments will scatter creating a potential hazard. This risk is even more acute when the substrate is a pressurised glass container. When a pressurised glass container breaks, the fragments are likely to be scattered over a much larger area.

The risks associated with the use of chemical coatings, such as for example bisphenol-A on plastic containers such as baby bottles, are well documented. Fragment retentive coatings for glass substrates therefore provide a much safer alternative to chemical coatings which may risk coming into contact with, and contaminating, the contents within the glass substrate.

There are a number of conventional coating formulations for glass substrates which aim to prevent cracking of the coating upon impact or to retain the shape of the substrate upon breakage. However, these conventional coatings suffer from a number of problems including: peeling, discolouration, poor adhesion to the substrate, poor scratch resistance, poor resistance to boiling water, long curing or drying times or require too many layers to be deposited to achieve the desired film thickness.

US2014/0295329 discloses a protective layer that is bonded to a photopolymer film. The protective layer includes silica nanoparticles, where the protective layer is required to be radiation cured. A problem of US2014/0295329 is that the coating would not work to retain fragments of a substrate and would have poor scratch resistance and poor adhesion to a glass substrate. A further problem of US2014/0295329 is that long curing times are required for the deposited coatings.

US2004/247879 discloses the use of a coating formulation including polyester and polyurethane resins. The resin formulation incorporates either 30nm or 140nm silica particles and is directed to preventing glass from breaking, rather than retaining glass fragments. A problem with US2004/247879 is that for the coating to be effective, a large number of layers, e.g. 65 layers, need to be deposited to achieve the desired film properties.

US2014/106163 discloses a known polyurethane formulation for a primer coating for an optical lens. The primer formulation includes particulate silica to improve the impact strength and the crack resistance of the coating. A problem with US2014/106163 is that the coating has poor chemical resistance and scratch resistance and requires an additional abrasion resistant coating to be applied on top of the primer coating. A further problem with US2014/106163 is that the coating would not be able to effectively retain substrate fragments.

US2012/107618 discloses a known coating formed from urethane resin and isocyanate resin. The formulation also includes a silica-based material as a flattener to reduce the gloss of the coating. A problem with US2012/107618 is that the coating has poor chemical resistance, poor scratch resistance and would not be able to effectively retain fragments.

EP0513368 discloses the use of a formulation of an aqueous polyurethane dispersion incorporating micron sized silica particles to produce a matt/frosted glass coating. A problem with the formulation of EP0513368 is that the resulting coating is not clear.

The present invention seeks to overcome or at least mitigate one or more of the problems associated with the prior art.

### Summary of the Invention

According to a first aspect of the invention there is provided a fragment retentive coating formulation comprising: an aqueous polyurethane dispersion; an aqueous dispersion of surface modified silica nanoparticles, in which the silica nanoparticles comprise a reactive surface; and a cross-linking agent for cross-linking between the polyurethane and the silica nanoparticles, wherein the reactive surface of the silica nanoparticles comprises an epoxy functionalised surface.

Advantageously, a fragment retentive coating formulation of polymerised polyurethane particles and epoxy functionalised silica nanoparticles that are cross-linked together via a cross linking agent has been found to provide improved chemical resistance, water resistance and adhesion properties of the resultant coating. Silica nanoparticles provide a hydroxyl functionalised surface that enables them to be modified to produce an epoxy functionalised nanoparticle surface. Silica nanoparticles have the advantage of allowing the eventual coating to exhibit a clear and high gloss finish.

The present invention provides a coating formulation which is capable of retaining fragments of a substrate. The present invention therefore reduces the risk of accidental injury caused by fragments of the substrate. The fragment retentive coating is also able to substantially retain the shape of the substrate, on breakage.

The fragment retentive coating of the present invention is particularly advantageous when the substrate is in the form of a container. In addition to retaining substrate fragments, the coating is able to substantially maintain the structure of the container, e.g for a beverage, pharmaceutical material or like product, upon breakage, at least in so far as preventing the likelihood of any gaps/apertures/fractures occurring in the coating. Accordingly, the coating formulation is able to retain both the glass fragments and also any contents of the container. This can be particularly useful in the pharmaceutical industry, where the contents can be very dangerous, and the ability to stop spillages is very important.

The presence of a cross-linking agent improves the adhesion ability of the formulation for a glass substrate and improves the toughness and chemical resistance of the coating provided by the formulation. The increased chemical resistance of the coating formulation is further advantageous in the pharmaceutical industry, where liquid/materials can be very dangerous.

The polyurethane may comprise an elongation value between 200% and 800%. In exemplary embodiments, the elongation value may be between 400% and 600%, e.g. 500%.

Advantageously, it has been found that having an elongation value in this range provides increased tear resistance and an improved fragment retentive coating. Providing polyurethane having elongation values significantly lower than this range has been found to produce a coating that is too hard and is liable to break. Providing polyurethane having elongation values significantly higher than this range has been found to result in poor tear resistance of the resultant coating.

The nanoparticles may be in the range of 2nm to 20nm. In exemplary embodiments, the nanoparticles are 12nm.

Advantageously, it has been found that providing a formulation having silica nanoparticles in this size range is able to produce a clear coating with good fragment retaining properties. It has been found that incorporating particles that are too large results in hazy unclear films and/or discolouration and have also been found to have a reduced benefit from the crosslinking of the polyurethane and the functionalised silica nanoparticles. It has been found that incorporating particles that are too small results in increased film hardness and produces a brittle coating.

In exemplary embodiments, the nanoparticles within the dispersion have substantially uniform cross-sectional dimensions.

In exemplary embodiments, the nanoparticles within the dispersion have a narrow size distribution.

The silica nanoparticles may comprise a negative surface charge.

In exemplary embodiments, the polyurethane dispersion comprises a polyurethane content of no more than about 90%. In exemplary embodiments, no more than about 80%. In exemplary embodiments, no more than about 70%, for example no more than about 60%.

In exemplary embodiments, the polyurethane dispersion comprises a polyurethane content of between 30% and 60% polyurethane. In exemplary embodiments, between about 40% and about 50% polyurethane.

In exemplary embodiments, the polyurethane content of the polyurethane dispersion may be in the range of 40% to 50%. In exemplary embodiments, the polyurethane content is approximately 45%.

Advantageously, providing a solids content of the polyurethane dispersion that is above 40%, e.g. 45%, enables a large film thickness to be deposited for each layer, thus reducing the overall time required (i.e. the number of depositions) to produce a desired film thickness. Providing a solids content that too low results in a film that is thin and so requires a larger number of depositions to achieve the desired coating thickness.

In exemplary embodiments, the ratio of the concentration of polyurethane to silica nanoparticles within the formulation is at least about 1:0.01. In exemplary embodiments, the ratio of the concentration of polyurethane to silica nanoparticles within the formulation is at least about 1:0.05. In exemplary embodiments, the ratio of the concentration of polyurethane to silica nanoparticles within the formulation is at least about 1:0.1. In exemplary embodiments, the ratio of the concentration of polyurethane to silica nanoparticles within the formulation is no more than about 1:0.75. In exemplary embodiments, the ratio of the concentration of polyurethane to silica nanoparticles within the formulation is no more than about 1:0.5; for example no more than about 1:0.3.

The ratio of the concentration of polyurethane to nanoparticles within the formulation may be in the range of approximately 1:0.01 and 1:0.75. In exemplary embodiments, the ratio of the concentration may be in the range of 1:0.1 and 1:0.3.

Advantageously, it has been found that providing a ratio of the concentration of polyurethane to nanoparticles within the formulation in this range results in improved film properties, i.e. chemical resistance, adhesion to substrates and resistance to water.

In exemplary embodiments, the polyurethane dispersion comprises polyurethane having a molecular weight of at least approximately 200,000 g/mol. In exemplary embodiments, the polyurethane dispersion comprises polyurethane having a molecular weight of at least approximately 300,000 g/mol.

The formulation may comprise a viscosity in the range of 1000 to 2000 mPa.s. In exemplary embodiments, the viscosity may be in the range of 1300-1400 mPa.s.

Advantageously, it has been found that providing a viscosity of the formulation in this range enables a large film thickness to be deposited in a single layer, thus reducing the overall time to produce a desired film thickness with desired fragment retaining properties without making it difficult to coat an entire substrate. It has been found that providing a viscosity that is too low results in a film that is too thin and the film also suffers from sagging of the coating, resulting in a non-uniform coating. It has been found that providing a formulation having too high a viscosity is difficult to coat over the entire substrate surface before the formulation begins to physically dry.

The cross-linking agent may comprise at least one of a silane, a carboiimide, an isocyanate or an aziridine.

Advantageously, these functional groups have been found to result in increased film properties, i.e. chemical resistance, adhesion to substrates and resistance to water.

The formulation may comprise isocyanate. The formulation may comprise a self-crosslinking polyurethane dispersion, such as for example an aliphatic urethane-acryl-hybrid. The aliphatic urethane-acryl-hybrid may for example comprise Daotan (including but not limited to Daotan TW 6490, Daotan 7000, and Daotan 1225). To further improve water and chemical resistance properties of the coatings, the aliphatic urethane-acryl-hybrid may be cross-linked with one or more of polyaziridine and/or carbodiimide.

In exemplary embodiments, the cross-linking agent is at least one of gammaglycidoxypropyltrimethoxysilane, glycidoxypropyltriethoxysilane, 3-methyacryloxypropyltrimethoxysilane, glycidoxypropyltrimethoxysilane, 4-((3 - (trimethoxysilyl)propoxy)methyl)-1,3-dioxolan-2-one, 3-methacryloxypropyltriethoxysilane, or 3-aminopropyltriethyoxysilane.

In exemplary embodiments, the ratio of the concentration of the polyurethane dispersion to crosslinking agent is at least about 1:0.02. In exemplary embodiments, the ratio of the concentration of the polyurethane dispersion to crosslinking agent is at least about 1:0.05, for example at least about 0.07. In exemplary embodiments, the ratio of the concentration of the polyurethane dispersion to crosslinking agent no more than about 1:0.5. In exemplary embodiments, the ratio of the concentration of the polyurethane dispersion to crosslinking agent is no more than about 1:0.3, for example no more than about 1:0.2.

The ratio of the concentration of the polyurethane dispersion to crosslinking agent may be in the range of approximately 1:0.02 to 1:0.5. In exemplary embodiments, the ratio of the concentration may be in the range of approximately 1:0.07 to 1: 0.2, for example approximately 1:0.1.

Advantageously, it has been found that providing a ratio of the concentration of polyurethane to the crosslinking agent within the formulation in this range results in improved film properties, i.e. chemical resistance, adhesion to substrates and resistance to water.

The formulation may comprise a stabiliser. In exemplary embodiments, the stabiliser may comprise a neutralising agent to control the pH of the formulation. In exemplary embodiments, the neutralising agent comprises an amine stabilising agent, which has been found to provide increased stability for this fragment retentive coating formulation.

Advantageously, providing a stabiliser enables the nanoparticles to stay suspended within the formulation prior to application of the coating formulation.

The concentration of nanoparticles in the aqueous dispersion may be in the range of approximately 30% to 50%. In exemplary embodiments, the concentration of nanoparticles may be approximately 40%.

Advantageously, providing a concentration of nanoparticles that is at least 30% increases the solids content of the formulation and so enables the coating thickness to be increased. It has been found that providing a higher solids content of the silica nanoparticles results in a coating having increased hardness and reduced flexibility. It has also been found that providing a lower solids content of the silica nanoparticles results in reduced effects from the crosslinking of the polyurethane and the functionalised nanoparticles.

The formulation may further comprise an antifoaming agent. In exemplary embodiments, approximately between 0.5-1% of the formulation is the antifoaming agent. In exemplary embodiments, approximately between 0.7-0.8% of the formulation is the antifoaming agent.

Advantageously, providing an antifoaming agent in this relative quantity prevents bubbles from forming in the coating due to the high viscosity which would otherwise reduce clarity.

The formulation may comprise a thickener. In exemplary embodiments, the concentration of the thickener in the formulation is approximately 0.05-0.25%. In exemplary embodiments, the concentration is approximately between 0.1-0.2%.

Advantageously, providing a thickener in this relative quantity enables a higher film thickness to be deposited in a single layer.

The thickener may be a non-ionic thickener. In exemplary embodiments, the thickener may be a polyurethane based non-ionic thickener.

Advantageously, providing a non-ionic thickener has been found to prevent bubbles from forming in the coating due to the high viscosity which would otherwise reduce clarity. Ionic thickeners have been found to stabilise the bubbles resulting in a poor quality film.

The formulation may further comprise a light stabiliser. In exemplary embodiments, the concentration of the light stabiliser in the formulation may be in the range of 2% to 4%. In exemplary embodiments, the concentration may be approximately 3%.

Advantageously, the light stabiliser prevents UV degradation of the coating formulation.

The formulation may further comprise an additional solvent. In exemplary embodiments, the solvent may be one or more of dipropylene glycol methyl ether, butyldiglycol, ethyldiglycol, butylglycol, dibasic ester, butylglycol acetate, benzyl alcohol, or dipropylene glycol n-butyl ether.

Advantageously, incorporating a solvent into the formulation slows down the physical drying process to enable the formulation to fully coat the entire substrate prior to the curing process initiating. The solvent is required during the application process so that the coating formulation does not dry out before the substrate has been coated. During electrostatic depostions, the action of applying the coating formulation can make it too dry to wet the substrate. Subsequently, the coated substrate undergoes a flash drying period, followed by a curing process.

In exemplary embodiments, the formulation comprises at least one additional agent selected from: flow and glide additive(s), flow and levelling agent(s); thickener(s), pigment(s), antifoaming agent(s), adhesion agent(s), wetting additive(s); stabiliser(s), crosslinking agent(s), deaerator(s), matting agent(s). Examples of such additional agents include: Gol LA 50 (wetting additive and glide and flow additive); Tego 270 (wetting additive); Tego 450 (glide and flow additive); MP200 (adhesion promoter); Addid 900 (adhesion promoter); Bayhydrol U XP 2239; Rheolate 20 255 (thickener); BYK-028 (antifoaming agent); Tego 904W (deaerator); Tinuvin 5151 (light stabiliser); x-Treme blue and/or violet (colour pigments); Additol VXW 6396 (flow and levelling agent); and Borchigel 0620 & 0621 (thickener).

According to a second aspect of the invention there is provided a method for coating a glass substrate with a fragment retentive coating, comprising: depositing at least one layer of a fragment retentive coating formulation according to the first aspect on a glass substrate; and curing the deposited layer(s) of the coating formulation.

In exemplary embodiments, the substrate is a glass substrate.

The deposited layer(s) may be cured by evaporating the solvent at room temperature and/or in a heated oven.

Curing of the deposited layer(s) of the coating formulation may be achieved by evaporating the solvent at room temperature and/or in a heated oven. The formulation may for example be cured by heating the coated glass substrate at a predetermined temperature for a predetermined period of time. In exemplary embodiments, the formulation is heated to a temperature of at least about 50oC. In exemplary embodiments, at least about 75oC, for example about 80oC.

The coating formulation may be cured by a process known as flash heating in which the coated substrate is heated at a first temperature for a short period of time, such as for example at least 30 seconds. In exemplary embodiments, the coated substrate is heated at a first temperature for about 1 minute. In exemplary embodiments, the coated substrate is heated at the first temperature for no more than 10 minutes. In exemplary embodiments, the coated substrate is heated at the first temperature for no more than 5 minutes. In exemplary embodiments, the formulation is heated to a first temperature of at least about 50oC. In exemplary embodiments, the formulation is heated to a first temperature of at least about 75oC, for example about 80oC. In exemplary embodiments, the formulation is heated to a first temperature in the range of between 50oC and 80oC.

In exemplary embodiments, the coated substrate may then be heated at a second temperature for a longer period of time. In exemplary embodiments, the coated substrate may then be heated at a second temperature for at least about 2 minutes. In exemplary embodiments, the coated substrate may then be heated at a second temperature for at least approximately 5 minutes. In exemplary embodiments, the coated substrate is heated at the second temperature for no more than 1 hour. In exemplary embodiments, the coated substrate is heated at the second temperature for no more than 30 minutes. The second temperature, also referred to as the cure temperature, may be higher than the first temperature. For example, the second temperature may be at least about 100oC. In exemplary embodiments, the second temperature may be at least about 120oC, for example 160oC. In exemplary embodiments, the maximum second temperature is 170oC. Adhesion of the formulation to the substrate has been found to be reduced at temperatures exceeding 170oC.

According to a third aspect of the invention there is provided a coated glass substrate comprising a layer of cured fragment retentive coating formulation according to the first aspect. In exemplary embodiments, the glass substrate is a container, bottle, jar or receptacle, for example a container for pharmaceutical liquids.

The substrate may further comprise a top layer of coating, herein referred to as the top coat. The top coat may be adhered to the base coat of fragment retentive coating formulation. Alternatively, the top coat formulation may be adhered to an intermediate or additional layer of coating formulation located between the top coat formulation and the fragment retentive coating formulation forming the base coat. The intermediate layer of coating formulation may also comprise a fragment retentive coating formulation according to the present invention.

The top coat may be any suitable coating formulation which is capable of adhering to the base coat comprising a fragment retentive formulation of the present invention. For example, the top coat may comprise a fragment retentive formulation of the present invention. In exemplary embodiments, the top coat has high scratch resistance and/or autoclave resistance properties.

In exemplary embodiments, the top coat comprises an aqueous dispersion of polyurethane and/or an aqueous dispersion of an aliphatic polyisocyanate resin. The polyurethane dispersion may for example be U400N, U445, U355, Daotan TW 7000, Daotan 6431/45WA, Picassian PU-406, Witcobond 788, and Alberdingk U5201, and any combination thereof. In exemplary embodiments, the polyurethane dispersion comprises U400N and/or U445.

The top coat may comprise an acrylic Fluoro copolymer emulsion, such as for example Neocryl AF10. The acrylic Fluoro copolymer emulsion may be cross-linked by any suitable crosslinking agent such as for example a cross-linking agent selected from one or more of: an isocyanate (such as for example Bayhydur BL 5335), amino polymer, urea formaldehyde, melamine formaldehyde, or any combination thereof.

The top coat may include any suitable additional agent selected from: flow and glide additive(s), flow and levelling agent(s); thickener(s), pigment(s), antifoaming agent(s), adhesion agent(s), wetting additive(s); stabiliser(s), cross-linking agent(s), deaerator(s), or any combination thereof, as discussed above in relation to the fragment retentive coating formulations.

The top coat may comprise at least one additional solvent. For example, one or more of the fragment retentive coating formulation and the top coat may comprise one or more of: dipropylene glycol methyl ether (DPM), butyldiglycol, ethyldiglycol, butylglycol, dibasic ester, butylglycol acetate, benzyl alcohol, and dipropylene glycol n-butyl ether (DPnB), or any combination thereof.

According to a further aspect of the invention, there is provided a container in the form of a bottle or jar of glass material, comprising: a body having a chamber, wherein the chamber defines walls having an external surface, further wherein the external surface of the chamber comprises a layer of fragment retentive coating formulation according to the first aspect cured thereon.

Embodiments of the present invention will now be described with reference to the following Figures.

### BRIEF DESCRIPTION OF FIGURES

Figure 1 illustrates a schematic view of a container;
Figure 2 illustrates a cross sectional schematic view of a wall of a container, coated with a layer of a fragment retentive coating formulation; and
Figure 3 illustrates a cross sectional schematic view of a wall of a further container, coated with a layer of a fragment retentive coating formulation and an additional top coat layer.

### DETAILED DESCRIPTION

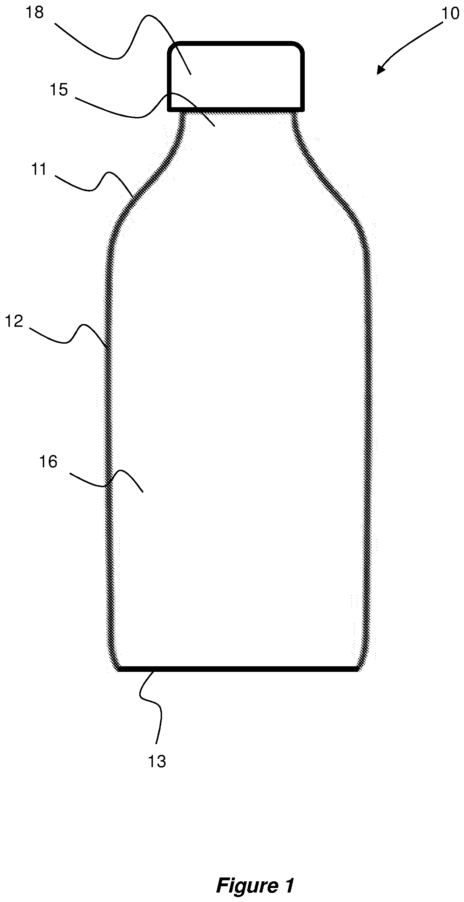

Referring firstly to Figure 1, a container is shown schematically at 10. In the illustrated embodiment, the container 10 is provided in the form of bottle or jar. In an exemplary embodiment, the container 10 is made from a glass material. The container 10 has a body 11 defining a chamber 16, for receiving product, for example a pharmaceutical or hazardous liquid or other substance. The chamber 16 has a side wall 12 and a base wall 13 and an inlet/outlet aperture 15. The container 10 is also provided with a lid or cap 18 to serve as a releasable closure for the inlet/outlet aperture 15 of the chamber 16.

In exemplary embodiments, the external surfaces of the body 11 (e.g. of the side wall 12 and base wall 13) are coated with a fragment retentive coating, for retaining the structure and fragments of the body 11 upon impact and/or deformation of the container 10. The fragment retentive coatings also serve to prevent fracture of the coated parts of the body, thereby preventing egress of product therethrough. This can be particularly important if the product of the container is of a hazardous nature, for example. The external surfaces serve as a substrate for the application of the fragment retentive coating.

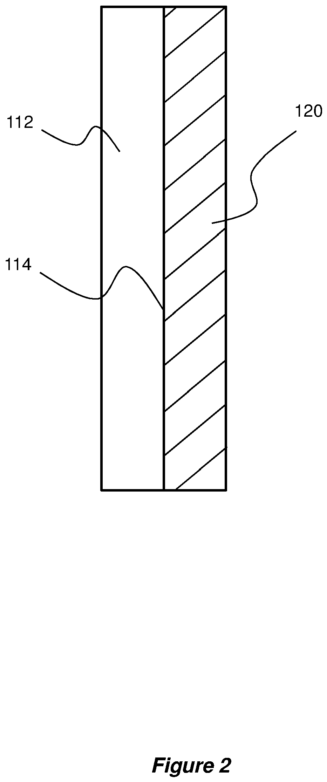

Referring now to Figure 2, a schematic cross-sectional view of a side wall 112 of a container 110 is shown. The external surface 114 of the side wall 112 is coated with a cured layer 120 of a fragment retentive coating formulation, e.g. of the kind described herein. It will be appreciated that in alternative embodiments, the side wall 112 of the container 110 may be coated with two or more cured layers 120, e.g. to suit the application.

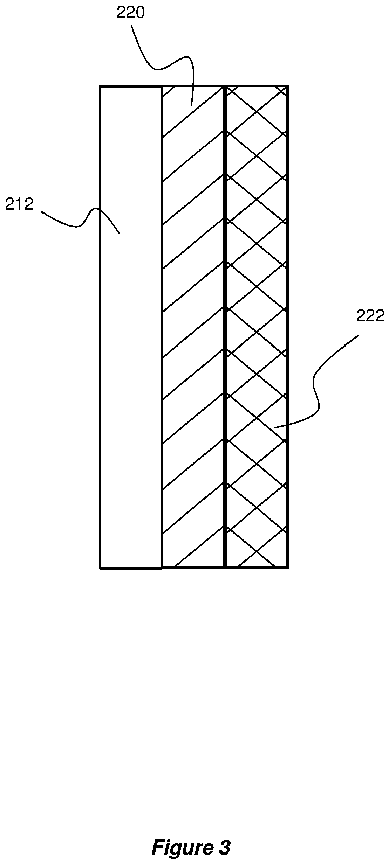

Referring now to Figure 3, a schematic cross-sectional view of the side wall 212 of a further container 210 is shown. The external surface 214 of the side wall 212 is coated with a cured layer 220 of a fragment retentive coating formulation, e.g. of the kind described herein. The outer layer of the coating 220 is in turn coated with a cured layer 222 of top coat formulation, e.g. of the kind described herein.

In exemplary embodiments, the containers 110, 210 are in the form of a bottle, jar or other receptacle of glass material, e.g. of the kind shown in Figure 1, defining a chamber for storage of product, and wherein the fragment retentive coating retains the structure and fragments of the body upon impact and/or deformation of the container.

Examples of suitable fragment retentive coating formulations, top coating formulations, methods of preparing and applying the fragment retentive and top coat formulations are now set forth.

### Example 1 - Fragment Retentive Coating Formulation

**Table 1**

| | NVWt (%) | Volume (ml) |
|---|---|---|
| Aqueous Polyurethane dispersion | 45 | 385 |
| Silica Nanoparticles | 40 | 49.90 |
| Cross Linking Agent | 100 | 16 |
| Wetting Agent | 100 | 0.75 |
| Light Stabiliser | 100 | 13.5 |
| Thickener | 8 | 0.7 |
| Antifoaming Agent | 100 | 3.5 |

Referring firstly to Table 1, a fragment retentive formulation according to an embodiment of the present invention is shown. The formulation as shown in Table 1 is prepared by blending an aqueous polyurethane dispersion having a molecular weight of approximately 300,000 g/mol, having a polymer solids content of approximately 45%, with an aqueous dispersion of surface modified silica nanoparticles.

The polyurethane dispersion is in the form of polymerised polyurethane particles suspended in water. Providing a solids content of the polyurethane dispersion that is above 40%, for example at 45%, enables a large film thickness to be deposited with each layer, thus reducing the overall time required (i.e. the number of depositions) to produce a desired film thickness. It will be appreciated that a substantially higher solids content may be used to produce in a thicker deposited film layer. Providing a high polyurethane solids content results in a formulation that may be difficult to coat over the substrate. However, it will be appreciated that a higher solids content could be provided and that the formulation may be adjusted, e.g. with wetting agents, to provide a suitable formulation that can be easily coated.

The polyurethane has a molecular weight of approximately 300,000 g/mol. The polyurethane particles in the formulation are considered to be fully polymerised and so substantially no further polymerisation of the polyurethane is considered to occur during curing of the formulation.

The polyurethane in the formulation of Table 1 has an elongation value of approximately 500%. It will be appreciated that the exact elongation value of each polyurethane particle may vary slightly and that this is an average value. In alternative embodiments, different elongation values may be used. It has been found that providing a formulation where the polyurethane has an elongation value down to approximately 200% and up to approximately 800% are still able to effectively retain glass fragments. The elongation value is a measure of the ductility of the polymer and indicates the amount of strain that the polymer can undergo before failing.

The formulation further includes an aqueous dispersion of surface modified silica nanoparticles, e.g. Bindzil CC401. The particles used in the formulation in Table 1 are 12nm in diameter. However, it will be appreciated that the nanoparticle size may be varied, for example between 2nm-30nm.

The silica nanoparticle dispersion has a solids content of approximately 40%. Providing a 40% solids content results in a formulation that having a suitable viscosity and also a suitable film thickness build. The solids content of the silica nanoparticle dispersion may very between 30% and 50%. It has been found that providing too high of a solids content of the silica nanoparticles may result in a coating having increased hardness and reduced flexibility. These defects can be remedied by providing a higher film thickness, so it will be understood that the silica nanoparticle dispersion solids content may be higher than 50% in some embodiments.

The silica nanoparticles have a reactive surface, in the form of hydroxyl groups. It will be appreciated that the presence of the hydroxyl groups on the silica nanoparticle surface is essential as it allows the reactive surface to be modified with an epoxy silane molecule. The silane group undergoes hydrolysis in water to produce silanol groups, which in turn bond with the hydroxyl groups on the surface of the nanoparticle. This process results in a silica nanoparticle having an epoxy functionalised surface. The epoxy functionalised surface enables the silica nanoparticles to be cross-linked with the polyurethane.

The ratio of the concentration of polyurethane particles to silica nanoparticles within the formulation of Table 1 is approximately 1:0.1. However, it has been found that providing a ratio of the concentration between 1:0.01 and 1:0.75 still provides the improved film properties that result from the formulation.

The formulation of Table 1 further includes a cross linking agent in the form of gammaglycidoxypropyltrimethoxysilane. The crosslinking agent is provided to crosslink the functionalised silica nanoparticles with the polyurethane. Specifically, the crosslinking agent bonds with the epoxy functionalised surface of the silica nanoparticles and the polyurethane. The resulting cross-linked formulation/coating results in high chemical resistance, high water resistance and good adhesion to the substrate.

The crosslinking reaction begins to work immediately after it is added to the formulation at room temperature. However, in order to produce good adhesion of the coating to glass, the reaction needs to be cured at a temperature above 80°C. The cure temperature must be limited to 170°C, as above this temperature the adhesion to glass begins to degrade.

It will be appreciated that alternative crosslinking agents may be used, and it has been found that providing the crosslinking agent in the form of a silane, a carboiimide, an isocyanate or an aziridine results in the advantageous film properties. It will further be appreciated that a combination of several different crosslinking agents may be used in a formulation to suit the application. Exemplary alternative crosslinking agents are glycidoxypropyltriethoxysilane, 3-methyacryloxypropyltrimethoxysilane, 4-((3-(trimethoxysilyl)propoxy)methyl)-1,3-dioxolan-2-one, 3-methacryloxypropyltriethoxysilane, or 3-aminopropyltriethyoxysilane.

In the embodiment of Table 1, the ratio of the concentration of the polyurethane dispersion to crosslinking agent is approximately 1:0.09. However, it will be appreciated that in alternative embodiments the ratio of the concentration of the polyurethane to crosslinking agent may be in the range of approximately 1:0.02 to 1:0.5, whilst still providing the advantageous film properties.

The formulation of Table 1 also includes a wetting and surface slip agent in the form of Tego 450. It will be appreciated that alternative wetting agents may be used in alternative embodiments. The wetting agent is added to the formulation to reduce the surface tension of the formulation to enable it to spread over a substrate surface more effectively to ease the coating/deposition process. The concentration of the wetting agent in the formulation is approximately 0.15%, but it will be appreciated that the concentration of the wetting agent may vary in alternative embodiments, for example between 0.1% and 0.2%.

The formulation of Table 1 also includes a light stabiliser, in the form of Tinuvin 5151. However, it will be appreciated that alternative light stabilisers may be used in alternative embodiments. Although the coating formulation of the present invention is not curable by exposure to UV radiation, the coating formulation is susceptible to degradation via exposure to UV radiation. In order to prevent this degradation, the light stabiliser works to dissipate the UV radiation. The concentration of the wetting agent in the formulation is approximately 3%, but it will be appreciated that the concentration of the wetting agent may vary in alternative embodiments, for example between 2% and 4%.

The formulation of Table 1 also includes an antifoaming agent (or deaerator or defoamer), which is provided as Tego 904W. In alternative embodiments different antifoaming agents could be used. The concentration of the antifoaming agent is approximately 0.7%. However, it will be appreciated that the concentration may vary in other embodiments, for example between 0.5% and 0.9%. Providing an antifoaming agent in this concentration has been found to prevent bubbles from forming in the coating. The formation of bubbles is an issue as they are not easily removed from the formulation due to the high viscosity. Any such bubbles would reduce clarity of the subsequent film and also result in a non-uniform film coating.

The formulation of Table 1 further includes a thickener. In this embodiment the thickener is Borchigel 0620. The thickener is a polyurethane based non-ionic thickener, but it will be appreciated that other thickeners could be used. The concentration of the thickener is approximately 0.15%. However, in alternative embodiments the concentration of the thickener may vary between 0.05-0.25%. Providing a thickener in this concentration enables a higher film thickness to be deposited in a single layer. The thickener also works to prevent sagging of the coating that may otherwise occur during the curing process resulting in a non-uniform coating. Using a non-ionic thickener has been found to prevent bubbles from forming in the coating, which would reduce clarity. Ionic thickeners have been found to stabilise the bubbles resulting in a poor quality film.

It is to be understood that the formulation may also include one or more additional solvents.

The coating formulation is a colourless waterborne coating which exhibits high film strength. The formulation has high wet and dry adhesion properties. The formulation has increased ability to hold fragments in place in the event of breakages of a coated substrate. The fragment retentive coating formulation is a high gloss, tough, clear coating. The coatings of the present invention exhibit excellent durability and fragment retention.

This coating formulation was found to have excellent adhesion properties, in particular to uncoated glass. This coating formulation was found to be clear and to have good wet adhesion properties. The adhesion properties were tested by immersing the coated substrate in water for 18 hours. It was found that the coating formulation has good adhesion properties after water immersion.

### Example 2 - Method of Preparing the Fragment Resistive Coating Formulation of Example 1

An aqueous dispersion of polyurethane is added to a tank together with an aqueous dispersion of surface modified silica nanoparticles in a ratio of polyurethane:nanoparticles of 1:0.115.

The additional components including the; wetting agent (e.g. Tego 450); light stabiliser (e.g. Tinuvin 5151); thickener (e.g. Borchigel 0620); and antifoaming agent (e.g. Tego 904W) are also added to the tank in the quantities shown in Table 1. It is however to be understood that the formulation may comprise one or more, all of, or none of these additional components. The crosslinking agent (e.g. glycidoxypropyltrimethoxysilane) is added to the coating formulation prior to coating of a substrate, as the formulation would not be stable in the presence of the crosslinking agent.

Although this example illustrates a method for preparing the fragment resistive coating formulation of Example 1, it is to be understood that the method can be used to prepare any fragment retentive coating formulation comprising an aqueous dispersion of polyurethane together with an aqueous dispersion of surface modified silica particles.

The formulation may comprise any suitable combination of additional additives such as for example glide and flow additives, stabilisers, pigments, thickeners, antifoaming agents, cross-linking agents, deaerators, or any combination thereof.

### Example 3 - Method of coating a Glass Substrate with Fragment Resistive Coating

### Formulation of Example 1

A glass bottle (70 cml bottle) is heated to approximately 40oC. A layer of the formulation of Example 1 is coated onto the outer surface of the glass bottle. The formulation may be applied to the glass bottle by any suitable means such as for example by casting, spraying, electrostatic bell, electrostatic disc, spreading, spin coating or dip coating. Approximately 20g of the formulation of Example 1 is used to coat a 200ml bottle.

The coating is then cured using flash heating. The coated bottle is heated to a temperature of 80oC for one minute. The bottle is then placed in a stove which is heated at a temperature of 120oC for 3.5 minutes. The cured bottle is allowed to cool. The bottle comprises a first layer (herein referred to as the base coat) of cured coating formulation having a thickness of approximately 30 to 35 microns.

A second layer of coating formulation may then be added on top of the base coat. The coated bottle may be cured by flash heating the bottle to 80oC for 1 minute. The bottle may then be placed in an oven for 20 minutes at a temperature of 160oC. The cured bottle is allowed to cool. The bottle comprises two layers of coating formulation having a thickness of approximately 60 to 65 microns.

One or more further coats of coating formulation may then be added on top of the cured coating on the bottle. One or more additional coats may comprise fragment retentive coating formulations of the present invention.

The further coats may again be cured by flash heating at a first temperature of approximately 80oC for 1 minute, and then at a second higher temperature of for example 120oC or 160oC for a longer time period. It is also to be understood that the bottles may be allowed to stand at room temperature for a period of time, for example 10 minutes, between flash heating and the second stage of heating in a stove.

It is to be understood that the coating formulations of the present invention are suitable for application onto any glass substrate, including but not limited to beverage containers, cosmetics, pharmaceutical containers, windows, and drinking glasses. It is to be understood that in some embodiments the formulation may be dried onto the surface of the glass substrate by evaporating the solvent at room temperature, and/or in an oven.

In exemplary embodiments, the coated substrate is dried at a temperature above the minimum temperature for film or coating formation on the substrate. This minimum temperature is generally close to the glass transition temperature of polyurethane in the presence of water.

On evaporation of the solvent and/or on heating of the coated substrate, the polyurethane shell deforms and fills voids between the surface modified silica nanoparticles to provide a high performance functional coating with strong mechanical properties, and in particular high impact resistance. The coating formulations of the present invention combine the flexibility of polyurethane polymers with the mechanical properties of the surface modified silica nanoparticles.

### Example 4 - Impact Testing

Three glass bottles (70 cml bottles), referred to herein as the first set of bottles, were coated with a single layer of the fragment retentive coating of Example 1. The cured coating formulation forms a layer having a thickness of between 30 and 35 microns.

A further three glass bottles (70 cml bottles), referred to herein as the second set of bottles, were coated with two layers of the fragment retentive coating formulation of Example 1. The two layers of cured coating formulation form a coating having a thickness of between 60 and 65 microns.

A further three glass bottles (70 cml bottles), referred to herein as the third set of bottles, were coated with three layers of the fragment retentive coating formulation of Example 1. The three layers of cured coating formulation form a coating having a thickness of between 90 and 100 microns.

A control sample of glass bottles (70 cml bottles) containing no coating were also provided.

Each set of bottles, and the control sample, were tested to assess the effectiveness of the cured coating formulation of the present invention, and to determine whether the coating(s) offered any protection against impact damage.

Three bottles from each set were struck just above the embossed area using an AGR Impact Tester at increasing forces until the bottles sustained damage. The results are shown in Tables 2 and 3:

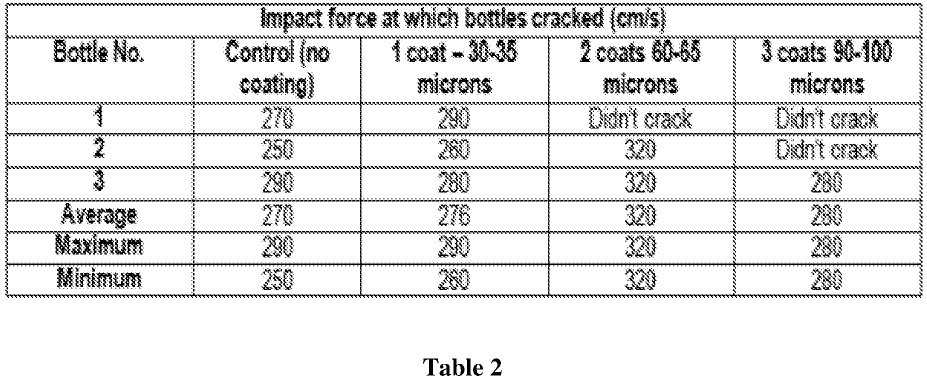

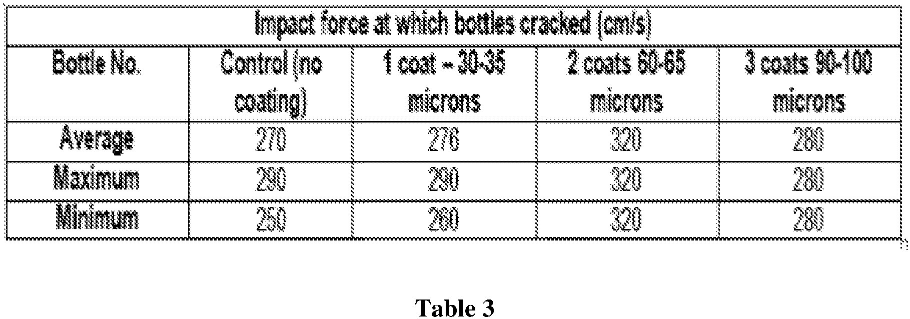

The control bottles (without any coating) all broke and fragmented. The bottles have been completely destroyed by the impact force and the shape of the bottle is lost.

The three sets of bottles coated with fragment retentive coating formulation sustained damage and cracked. However, the coating held the broken pieces of the bottles in place. All the bottles of the first set cracked but retained the shape of the bottle. Two of the bottles of the second set cracked but retained the shape of the bottle. Only one of the three bottles of the third set cracked but retained the approximate shape of the bottle.

The testing showed that a single layer of cured fragment retentive coating formulation of Example 1, approximately 30 to 35 microns thick, is sufficient to contain the broken bottle pieces. It has also been found that as the thickness of the layer(s) of cured coating formulation increases, the bottle is able to withstand higher levels of impact

### Example 5 - Fragment Retentive Coating Formulation

**Table 4**

| | NVWt% | Volume (ml) |
|---|---|---|
| Aqueous Polyurethane Dispersion | 45 | 115 |
| Cross Linking Agent | 100 | 5 |
| Silica Nanoparticle Dispersion | 40 | 15 |
| Solvent | 95 | 1.00 |
| Wetting Agent | 100 | 0.3 |
| Thickener | 8 | 0.3 |
| Flow and Levelling Agent | 50 | 1.4 |
| Antifoaming Agent | 100 | 1.4 |

An alternative fragment retentive coating formulation is shown in Table 4 and only the differences between the formulation of Table 4 and Table 1 will be discussed.

The formulation of Table 4 is provided with a solvent in the form of ethyldiglycol. The solvent is provided to slow down the drying/curing process of the formulation to enable more time for the coating process to take place. It will be appreciated that in other embodiments, different solvents such texanol may be used. It will also be appreciated that a solvent may be incorporated into the formulation of Table 1. The concentration of the solvent in the formulation is approximately 0.7%, but the concentration may vary to suit the application.

The formulation of Table 4 is also provided with a flow and levelling agent in the form of Additol VXW 6396. It will be appreciated that alternative flow and levelling agents may be used. Flow and levelling agents work to control the surface tension of the formulation, and enable the formulation to be coated onto a substrate more easily. The concentration of the flow and levelling agent in the formulation is approximately 1%, but it will be appreciated that the concentration may vary to suit the application.

The coating formulation of Table 4 may also further comprise a colour pigment additive such as x-treme blue and/or x-treme violet.

### Example 6 - Method for the preparation of the Fragment Retentive Coating Formulation of Example 5

Ethyldiglycol is added to the mixing tank. Borchigel 0620 is slowly added to the ethyldiglycol under constant stirring and mixed until homogenous to form a pre-mix formulation.

The aqueous polyurethane dispersion is added to a mixing tank and stirred slowly with a cowls type disperser at 200-300 rpm. Additol VXW6396 and Tego foamex 904W are then added to the batch under dispersion at 200-300 rpm.

Bindzil CC401 and ethyldiglycol are slowly added to the batch under dispersion at 200-300 rpm. The batch is then mixed for a further 30 minutes. The remaining additives (including the pigments) are then added under dispersion at 200-300 rpm to provide the coating formulation of Example 5.

The viscosity of the formulation may then be adjusted by blending the coating formulation with the pre-mix formulation comprising ethyldiglycol and Borchigel 0620. The components of the pre-mix formulation are present at an ethyldiglycol to 20 Borchigel 0620 ratio of about 1: 0.04. It is however to be understood that the ratio of the components within the pre-mix may be adjusted depending on the requirements for the formulation. Furthermore, the amount of pre-mix formulation added to the batch coating formulation will depend on the viscosity requirements for the coating formulation and may be adjusted accordingly.

The formulations of the present invention were found to have reduced curing times compared to conventional fragment retentive coating formulations. The formulations of the present invention have been found to have improved stability over time. The formulations of the present invention have been found to have reduced precipitate formation over time. The formulation of the present inventions have been found to have reduced yellowing effect. The formulations of the present invention have been found to have improved wet and dry adhesion ability to glass substrates compared to conventional fragment retentive formulations. The formulations of the present invention have been found to have improved fragment retention properties and/or impact resistance compared to conventional fragment retentive formulations. The formulations of the present invention are high gloss formulations which can therefore be used on glass without forming an opaque layer which can reduce the transparency of the substrate. It has been found that the thickness of a glass substrate may be reduced due to the improved impact resistance provided by the coating formulations of the present invention.

### Example 7 - Top coat coating formulation

**Table 5**

| | NVWt % | Volume (ml) |
|---|---|---|
| Bayhydur 5335 | 40 | 50 |
| Neocryl AF10 | 30 | 100 |
| Gol LA50 | 100 | 0.3 |
| Tego 410 | 100 | 0.4 |

The fragment retentive coatings may also be provided with a top coat layer. An exemplary top coat coating formulation is shown in Table 5.

The top coat comprises an aqueous dispersion of an aliphatic polyisocyanate resin (Bayhydur 5335). It is however to be understood that the top coat coating formulation may comprise an aqueous dispersion of polyurethane and/or an aqueous dispersion of an aliphatic polyisocyanate resin. The polyurethane dispersion may for example be U400N, U445, U355, Daotan TW 7000, Daotan 6431/45WA, Picassian 20 PU-406, Witcobond 788, and Alberdingk U5201, and any combination thereof.

The top coat formulation additionally comprises Neocryl AF10 as a water based acrylic fluoro copolymer emulsion, Gol LA50 as a flow and levelling substrate wetting agent, and Tego glide 410 as a slip and anti-crater additive. It is however to be understood that the top coat may include any suitable additional agents such as for example flow and glide additive(s), thickener(s), pigment(s), antifoaming agent(s), adhesion agent(s), stabiliser(s), cross-linking agent(s), deaerator(s), and any combination thereof. Examples of suitable agents are discussed herein.

It has been found that the top coat formulation has good adhesion properties to the fragment retentive coating formulations of the present invention. It has also been found that a substrate coated with the base coat of the fragment retentive coating formulations of the present invention together with top coat formulations, such as for example top coat formulation have improved scratch resistance and improved autoclave resistance.

### Example 8 - A method of coating a substrate with multiple layers of coating formulations.

A glass bottle is heated to 40oC. A first coat of a fragment retentive coating formulation according to the present invention is deposited on the bottle. The coating formulation may be deposited on the bottle by any suitable method. Approximately 20 g of coating formulation is applied to a 200 ml bottle.

The fragment retentive coating formulation is cured by evaporating the solvent by flash heating to 80oC for 1 minute. The bottle is then placed in a heated oven at a temperature of 120oC for 3.5 minutes. The bottle is then allowed to cool. It is to be understood that the coating formulation may be cured by allowing the solvent to evaporate at room temperature.

A top coat formulation of Example 7 is deposited on top of the base coat (provided by cured fragment retentive coating formulation) of the coated bottle. Again, the top coat formulation may be applied by any suitable means. The top coat formulation is cured by evaporating the solvent by flash heating to 80oC for 1 minute. The bottle is then placed in a heated oven at a temperature of 120oC for 3.5 minutes. The bottle is then allowed to cool. It is to be understood that the top coat formulation may be cured by allowing the solvent to evaporate at room temperature. It has been found that the top coat formulation provides a clear glossy film.

Although the invention has been described above with reference to one or more preferred embodiments, it will be appreciated that various changes or modifications may be made without departing from the scope of the invention as defined in the appended claims.

The fragment retentive coating formulation may also include an additional polyurethane dispersion, for example having a different polyurethane particle size and/or having a different solids content. Such a dispersion may be Incorez 835/494, Witcobond 288, Daotan TW 6490.

The formulation may also include an adhesion promoter e.g. Addid 900.

The formulation may also include an additional antifoaming agent (defoamer), such as BYK024.

The coating formulation may also further comprise a colour pigment additive such as x-treme blue and/or x-treme violet. The formulation may also include a pigment dispersion promoter, e.g. Advantex.

The formulation may also include additional wetting agents, e.g. Tego wet or Gol LA 50.

## Claims

1. A fragment retentive coating formulation
comprising: an aqueous polyurethane
dispersion;
an aqueous dispersion of surface modified silica nanoparticles, in which the silica nanoparticles comprise a reactive surface; and
a cross-linking agent for cross-linking between the polyurethane and the silica nanoparticles,
wherein the reactive surface of the silica nanoparticles comprises an epoxy functionalised surface.

2. A formulation according to claim 1, wherein the polyurethane comprises an elongation value between 200% and 800%, preferably wherein the elongation value is between 400% and 600%, e.g. 500%.

3. A formulation according to any preceding claim, wherein the nanoparticles are in the range of 2nm to 20nm, preferably 12nm.

4. A formulation according to any preceding claim, wherein polyurethane content of the polyurethane dispersion is in the range of 40% to 50%, preferably the polyurethane content is 45%.

5. A formulation according to any preceding claim, wherein the ratio of the concentration of polyurethane to nanoparticles within the formulation is in the range of 1:0.01and 1:0.75, preferably in the range of 1:0.1 and 1:0.3.

6. A formulation according to any preceding claim, wherein the formulation comprises a viscosity in the range of 1000 to 2000 mPa.s, preferably wherein the viscosity is in the range of 1300-1400 mPa.s.

7. A formulation according to any preceding claim, wherein the cross-linking agent comprises at least one of a silane, a carboiimide, an isocyanate or an aziridine, wherein, preferably, the cross-linking agent is at least one of gammaglycidoxypropyltrimethoxysilane, glycidoxypropyltriethoxysilane, 3-methyacrylo xypropyltrimethoxysilane, glycidoxypropyltrimethoxysilane, 4-((3-(trimethoxysilyl)propoxy)methyl)-1,3-dioxolan-2-one, 3-methacryloxypropyltriethoxysilane, or 3-aminopropyltriethyoxysilane.

8. A formulation according to any preceding claim, wherein the ratio of the concentration of the polyurethane to crosslinking agent is in the range of 1:0.02 to 1:0.5, preferably in the range of 1:0.07 to 1: 0.2, for example 1:0.1, and/or wherein the formulation comprises a neutralising agent, preferably wherein the neutralising agent comprises an amine.

9. A formulation according to any preceding claim, wherein the concentration of nanoparticles in the aqueous dispersion is in the range of 30% to 50%, preferably it is 40%.

10. A formulation according to any preceding claim, further comprising an antifoaming agent, preferably wherein the concentration of the antifoaming agent in the formulation is between 0.5-1%, more preferably between 0.7-0.8%.

11. A formulation according to any preceding claim, further comprising a thickener, preferably wherein the concentration of the thickener in the formulation is between 0.05-0.25%, for example between0.1-0.2%, and/or wherein the thickener is a non-ionic thickener, for example a polyurethane based non-ionic thickener.

12. A formulation according to any preceding claim, further comprising a light stabiliser, preferably wherein the concentration of the light stabiliser in the formulation is in the range of 2% to 4%, preferably 3%, and or wherein the formulation further comprises an additional solvent, preferably wherein the solvent is at least one of dipropylene glycol methyl ether, butyldiglycol, ethyldiglycol, butylglycol, dibasic ester, butylglycol acetate, benzyl alcohol, or dipropylene glycol n-butyl ether.

13. A method for coating a glass substrate with a fragment retentive coating, comprising:
depositing at least one layer of a fragment retentive coating formulation according to any preceding claim on a glass substrate; and
curing the deposited layer (s) of the coating formulation.

14. A method as claimed in claim 13, wherein the deposited layer(s) is cured by evaporating the solvent at room temperature, or wherein the deposited layer(s) are cured in a heated oven, preferably at a temperature between 80°C and 170°C.

15. A coated glass substrate comprising a layer of cured fragment retentive coating formulation according to any one of claims 1 to 12, preferably wherein the glass substrate is a glass container.

## Patentansprüche

1. Fragment zurückhaltende Beschichtungsformulierung,
umfassend: eine wässrige
Polyurethandispersion;
eine wässrige Dispersion aus oberflächenmodifizierten Siliziumdioxid-Nanopartikeln, wobei die Siliziumoxid-Nanopartikel eine reaktive Oberfläche umfassen; und
ein Vernetzungsmittel für die Vernetzung zwischen dem Polyurethan und den Siliziumoxid-Nanopartikeln,
wobei die reaktive Oberfläche der Siliziumoxid-Nanopartikel eine epoxyfunktionalisierte Oberfläche umfasst.

2. Formulierung nach Anspruch 1, wobei das Polyurethan einen Dehnungswert von zwischen 200 % und 800 % umfasst, vorzugsweise wobei der Dehnungswert zwischen 400 % und 600 % liegt, z.B. 500 %.

3. Formulierung nach einem der vorhergehenden Ansprüche, wobei die Nanopartikel im Bereich von 2 nm bis 20 nm liegen, vorzugsweise 12 nm.

4. Formulierung nach einem der vorhergehenden Ansprüche, wobei der Polyurethangehalt der Polyurethandispersion im Bereich von 40 % bis 50 % liegt, vorzugsweise beträgt der Polyurethangehalt 45 %.

5. Formulierung nach einem der vorhergehenden Ansprüche, wobei das Verhältnis der Konzentration von Polyurethan zu Nanopartikeln in der Formulierung im Bereich von 1:0,01 bis 1:0,75 liegt, vorzugsweise im Bereich von 1:0,1 bis 1:0,3.

6. Formulierung nach einem der vorhergehenden Ansprüche, wobei die Formulierung eine Viskosität im Bereich von 1000 bis 2000 mPa.s umfasst, vorzugsweise wobei die Viskosität im Bereich von 1300 bis 1400 mPa.s liegt.

7. Formulierung nach einem der vorhergehenden Ansprüche, wobei das Vernetzungsmittel mindestens eines von einem Silan, einem Carbodiimid, einem Isocyanat oder einem Aziridin umfasst, wobei das Vernetzungsmittel vorzugsweise mindestens eines von Gamma-Glycidoxypropyltrimethoxysilan, Glycidoxypropyltriethoxysilan, 3-Methacryloxypropyltrimethoxysilan, Glycidoxypropyltrimethoxysilan, 4-((3-(Trimetoxysilyl)propoxy)methyl)-1,3-dioxolan-2-on, 3-Methacryloxypropyltriethoxysilan oder 3-Aminopropyltriethoxysilan ist.

8. Formulierung nach einem der vorhergehenden Ansprüche, wobei das Verhältnis der Konzentration von Polyurethan zu dem Vernetzungsmittel in der Formulierung im Bereich von 1:0,02 bis 1:0,5 liegt, vorzugsweise im Bereich von 1:0,07 bis 1:0,2, zum Beispiel 1:0,1 und/oder wobei die Formulierung ein Neutralisationsmittel umfasst, vorzugsweise wobei das Neutralisationsmittel ein Amin umfasst.

9. Formulierung nach einem der vorhergehenden Ansprüche, wobei die Konzentration von Nanopartikeln in der wässrigen Dispersion im Bereich von 30 % bis 50 % liegt, vorzugsweise liegt sie bei 40 %.

10. Formulierung nach einem der vorhergehenden Ansprüche, weiterhin umfassend ein Antischaummittel, vorzugsweise wobei die Konzentration des Antischaummittels in der Formulierung von 0,5 bis 1 %, bevorzugter von 0,7 bis 0,8 % beträgt.

11. Formulierung nach einem der vorhergehenden Ansprüche, weiterhin umfassend ein Verdickungsmittel, vorzugsweise wobei die Konzentration des Verdickungsmittels in der Formulierung von 0,05 bis 0,25 %, zum Beispiel von 0,1 bis 0,2 % beträgt, und/oder wobei das Verdickungsmittel ein nichtionisches Verdickungsmittel ist, zum Beispiel ein nichtionisches Verdickungsmittel auf Basis von Polyurethan.

12. Formulierung nach einem der vorhergehenden Ansprüche, weiterhin umfassend ein Lichtschutzmittel, vorzugsweise wobei die Konzentration des Lichtschutzmittels in der Formulierung im Bereich von 2 % bis 4 % liegt, vorzugsweise 3 %, und/oder wobei die Formulierung weiterhin ein zusätzliches Lösemittel umfasst, vorzugsweise wobei das Lösemittel mindestens eines von Dipropylenglykolmethylether, Butyldiglykol, Ethyldiglykol, Butylglykol, dibasischer Ester, Butylglykolacetat, Benzylalkohol oder Dipropylenglykol-n-butylether ist.

13. Verfahren zur Beschichtung eines Glassubstrats mit einer Fragment zurückhaltenden Beschichtung, umfassend:
Ablagern von mindestens einer Schicht einer Fragment zurückhaltenden Beschichtungsformulierung nach einem der vorhergehenden Ansprüche auf einem Glassubstrat; und
Aushärten der abgelagerten Schicht(en) der Beschichtungsformulierung.

14. Verfahren nach Anspruch 13, wobei die abgelagerte(n) Schicht(en) ausgehärtet wird/werden, indem das Lösemittel bei Raumtemperatur verdampft wird, oder wobei die abgelagerte(n) Schicht(en) in einem erwärmten Ofen ausgehärtet wird/werden, vorzugsweise bei einer Temperatur von 80 °C bis 170 °C.

15. Beschichtetes Glassubstrat, umfassend eine Schicht aus einer ausgehärteten Fragment zurückhaltenden Beschichtungsformulierung nach einem der Ansprüche 1 bis 12, wobei das Glassubstrat vorzugsweise ein Glasbehälter ist.

## Revendications

1. Formulation de revêtement à rétention de fragments comprenant :
une dispersion aqueuse à base de polyuréthane ;
une dispersion aqueuse à base de nanoparticules de silice modifiée en surface, dans laquelle les nanoparticules de silice comprennent une surface réactive ; et
un agent de réticulation permettant la réticulation entre le polyuréthane et les nanoparticules de silice,
dans laquelle la surface réactive des nanoparticules de silice comprend une surface fonctionnalité par un époxy.

2. Formulation selon la revendication 1, dans laquelle le polyuréthane comprend une valeur d'allongement comprise entre 200 % et 800 %, de préférence dans laquelle la valeur d'allongement est comprise entre 400 % et 600 %, par exemple 500 %.

3. Formulation selon l'une quelconque des revendications précédentes, dans laquelle les nanoparticules se trouvent dans la plage comprise entre 2 nm et 20 nm, de préférence 12 nm.

4. Formulation selon l'une quelconque des revendications précédentes, dans laquelle la teneur en polyuréthane de la dispersion à base de polyuréthane se trouve dans la plage comprise entre 40 % et 50 %, de préférence la teneur en polyuréthane est de 45 %.

5. Formulation selon l'une quelconque des revendications précédentes, dans laquelle le rapport de la concentration de polyuréthane aux particules situées à l'intérieur de la formulation se trouve dans la plage comprise entre 1:0,01 et 1:0,75, de préférence dans la plage comprise entre 1:0,1 et 1:0,3.

6. Formulation selon l'une quelconque des revendications précédentes, dans laquelle la formulation comprend une viscosité dans la plage comprise entre 1 000 et 2 000 mPa.s, de préférence dans laquelle la viscosité se trouve dans la plage comprise entre 1 300 et 1 400 mPa.s.

7. Formulation selon l'une quelconque des revendications précédentes, dans laquelle l'agent de réticulation comprend au moins un composé parmi un silane, un carbodiimide, un isocyanate ou un aziridine, dans laquelle, de préférence, l'agent de réticulation est au moins un composé parmi le gamma-glycidoxypropyltriméthoxysilane, le glycidoxypropyltriéthoxysilane, le 3-méthyacryloxypropyltriméthoxysilane, le glycidoxypropyltriméthoxysilane, la 4-((3-(triméthoxysilyl)propoxy)méthyl)-1,3-dioxolan-2-one, le 3-méthacryloxypropyltriéthoxysilane, ou le 3-aminopropyltriéthyoxysilane.

8. Formulation selon l'une quelconque des revendications précédentes, dans laquelle le rapport de la concentration du polyuréthane à l'agent de réticulation se trouve dans la plage comprise entre 1:0,02 et 1:0,5, de préférence dans la plage comprise entre 1:0,07 et 1:0,2, par exemple 1:0,1, et/ou dans laquelle la formulation comprend un agent de neutralisation, de préférence dans laquelle l'agent de neutralisation comprend une amine.

9. Formulation selon l'une quelconque des revendications précédentes, dans laquelle la concentration en nanoparticules dans la dispersion aqueuse se trouve dans la plage comprise entre 30 % et 50 %, de préférence est de 40 %.

10. Formulation selon l'une quelconque des revendications précédentes, comprenant en outre un agent anti-mousse, de préférence dans laquelle la concentration de l'agent anti-mousse dans la formulation est comprise entre 0,5 et 1 %, plus préférablement entre 0,7 et 0,8 %.

11. Formulation selon l'une quelconque des revendications précédentes, comprenant en outre un agent épaississant, de préférence dans laquelle la concentration de l'agent épaississant dans la formulation est comprise entre 0,05 et 0,25 %, par exemple comprise entre 0,1 et 0,2 %, et/dans laquelle l'agent épaississant est un épaississant non ionique, par exemple un épaississant non ionique à base de polyuréthane.

12. Formulation selon l'une quelconque des revendications précédentes, comprenant en outre un photostabilisant, de préférence dans laquelle la concentration du photostabilisant dans la formulation se trouve dans la plage comprise entre 2 % et 4 %, de préférence 3 %, et/ou dans laquelle la formulation comprend en outre un solvant supplémentaire, de préférence dans laquelle le solvant est au moins un solvant parmi l'éther méthylique du dipropylène glycol, le butyldiglycol, l'éthyldiglycol, le butylglycol, l'ester dibasique, l'acétate de butylglycol, l'alcool benzylique ou l'éther n-butylique du dipropylène glycol.

13. Procédé de revêtement d'un substrat de verre à l'aide d'un revêtement de rétention à fragments, comprenant :
le dépôt d'au moins une couche d'une formulation de revêtement de rétention à fragments selon l'une quelconque des revendications précédentes sur un substrat de verre ; et
le durcissement de la/des couche(s) déposée(s) de la formulation de revêtement.

14. Procédé selon la revendication 13, dans lequel le/les couche(s) déposée(s) est/sont durcie(s) par l'évaporation du solvant à température ambiante, ou dans lequel le/les couche(s) déposée(s) est/sont durcie(s) dans un four chauffé, de préférence à une température comprise entre 80 °C et 170 °C.

15. Substrat de verre enduit comprenant une couche de formulation durcie de revêtement de rétention à fragments selon l'une quelconque des revendications 1 à 12, de préférence dans lequel le substrat de verre est un récipient en verre.
